Europäisches Patentamt

European Patent Office

Office européen des brevets

(11) Veröffentlichungsnummer: **0 191 339**
A2

## (12) EUROPÄISCHE PATENTANMELDUNG

(21) Anmeldenummer: 86101003.1

(22) Anmeldetag: 25.01.86

(51) Int. Cl.⁴: **B 23 D 61/02**, B 24 D 5/12

(30) Priorität: 13.02.85 DE 3504826

(43) Veröffentlichungstag der Anmeldung: 20.08.86
Patentblatt 86/34

(84) Benannte Vertragsstaaten: **AT BE CH DE FR GB IT LI NL
SE**

(71) Anmelder: **Saljé, Ernst, Schulheide 4, D-2106 Bendestorf
(DE)**

(72) Erfinder: **Saljé, Ernst, Prof. Dr.-Ing., Schulheide 4,
D-2106 Bendestorf (DE)**
Erfinder: **Piester, Jörg, Dipl.-Ing., Berliner Strasse 18,
D-3304 Wendeburg (DE)**

(74) Vertreter: **Koscholke, Gotthold, Dr.-Ing., Rheinallee 147,
D-4000 Düsseldorf 11 (DE)**

(54) Scheibenförmiges Werkzeug.

(57) Um bei einem scheibenförmigen Werkzeug, namentlich Kreissägewerkzeug, das wenigstens auf einer Seite mit einer schwingungsmindernden Bekleidung versehen ist, einen sicheren Zusammenhalt des Grundkörpers (G) mit der Bekleidung (B) zu erreichen und eine Trennung der Abdeckung (A) der letzteren vom Grundkörper (G) zu verhindern, ist ein sich in eine Nut (1) des Grundkörpers (G) hinein erstreckender Randbereich (10) der Abdeckung (A) zumindest teilweise rückseitig und/oder stirnseitig durch wenigstens ein Halteelement (21) elastisch mit dem Grundkörper (G) verbunden.

Scheibenförmiges Werkzeug

Die Erfindung bezieht sich auf ein scheibenförmiges, am Umfang mit definierten oder undefinierten Schneiden versehenes Werkzeug, namentlich Kreissäge-Werkzeug, Trennschleifscheibe od.dgl. nach dem Oberbegriff des Anspruchs 1.

Es ist ein Kreissäge-Werkzeug bekannt (DE-PS 27 46 192), dessen Stammblatt wenigstens auf einer Seite mit einer Kleberschicht und einer auf dieser angeordneten Abdeckung versehen ist. Für die Abdeckung ist dabei eine von der Kleberschicht unabhängige und dieser ein Dämpfungsvermögen unter Schubbeanspruchung belassende mechanische Halterung vorgesehen.

Eine besondere Ausbildung eines scheibenförmigen Werkzeuges mit mechanischer Halterung für die Abdeckung ist aus der DE-PS 33 10 434 bekannt. Dabei weist der Grundkörper oder das Stammblatt des Werkzeuges wenigstens in einer Seitenfläche eine durchgehende Nut auf, in die sich die Abdeckung mit ihrem äußeren Randbereich hinein erstreckt,

0191339

wobei wenigstens ein am Grundkörper abgestütztes Halteelement den in die Nut reichenden Randbereich der Abdeckung außenseitig übergreift.

Aufgabe der Erfindung ist es, eine weitere vorteilhafte Lösung für das Problem zu finden, einen sicheren Zusammenhalt des Stammblattes oder Grundkörpers des Werkzeuges mit seiner schwingungsmindernden Bekleidung zu erreichen und die Gefahr einer Trennung von Grundkörper und Abdeckung auszuschließen. Weitere damit im Zusammenhang stehende Probleme, mit denen sich die Erfindung befaßt, ergeben sich aus der jeweiligen Erläuterung der aufgezeigten Lösung.

Die Erfindung sieht vor, daß die Abdeckung innerhalb der Nut zumindest teilweise rückseitig und/oder stirnseitig durch wenigstens ein Halteelement elastisch mit dem Grundkörper verbunden ist.

Es hat sich gezeigt, daß dadurch eine besonders vorteilhafte Sicherung des Zusammenhalts von Grundkörper und Abdeckung bzw. Bekleidung erzielbar ist, auch ohne daß es einer die Abdeckung außenseitig übergreifenden Halterung bedürfte. Zugleich ergibt sich eine besonders einfache und fertigungsgünstige Ausbildung.

Als Halterung kann jedes Element oder Material in Betracht kommen, welches eine beständige Verbindung zwischen Abdeckung und Grundkörper ermöglicht und dabei der Bekleidung das gewünschte Dämpfungsvermögen so weit wie möglich beläßt. Insbesondere wird als Halteelement ein Kleber mit entsprechenden Elastizitätseigenschaften vorgesehen. Bei einem solchen Kleber handelt es sich dann im Normalfall um ein anderes Material als dasjenige der viskoelastischen Schicht zwischen dem Grundkörper und der Abdeckung.

Es lassen sich jedoch Fälle nicht völlig ausschließen, in denen für die viskoelastische Schicht und als Halteelement das gleiche Material oder ähnliche Materialien verwendet werden können.

Bei einer besonders vorteilhaften Ausführung weist die Nut eine geneigte Fläche auf, also ganz oder teilweise eine Kegelfläche. Dies ergibt eine gute Anlage mit großer Haftfläche und stellt außerdem eine fertigungstechnisch günstige Ausbildung dar.

Zweckmäßig erstreckt sich dabei ein Randbereich der Abdeckung wenigstens teilweise im wesentlichen parallel zu der geneigten Fläche.

In der Nut ist zweckmäßig wenigstens eine Ausnehmung, Vertiefung od.dgl. zur teilweisen Aufnahme des Halteelements vorgesehen. Dadurch wird dieses zusätzlich verankert.

Für die Ausbildung der Nut bestehen im übrigen verschiedene Möglichkeiten, so daß auch unterschiedlichen Erfordernissen gut Rechnung getragen werden kann.

In einem radial über den Rand der Abdeckung hinausragenden Teil kann die Nut z.B. eine geneigte Begrenzungsfläche, eine im wesentlichen zylindrische Begrenzungsfläche oder auch eine Hinterschneidung aufweisen.

Eine weitere vorteilhafte Ausführung besteht darin, daß die Abdeckung einen abgewinkelten Rand aufweist, der in die Nut hineinragt. Die Verbindung mit dem Grundkörper ist dabei zweckmäßig so ausgebildet, daß das Halteelement die Stirnfläche mit benachbarten Bereichen einbettet. Die Nut hat insbesondere einen im wesentlichen rechteckigen Querschnitt mit abgerundeten Ecken.

Weitere Einzelheiten, Merkmale und Vorteile der Erfindung ergeben sich aus der nachstehenden Erläuterung von Ausführungsbeispielen, aus der zugehörigen Zeichnung und aus den Ansprüchen. Es zeigen:

Fig. 1 ein Werkzeug gemäß der Erfindung in teils schematischer Seitenansicht, wobei an einer Stelle die Abdeckung aufgebrochengezeichnet ist,

Fig. 2 einen Schnitt nach der Linie II - II in Fig. 1 und

Fig. 3 bis 9 weitere Ausführungen des erfindungsgemäßen Werkzeuges jeweils in einem der Fig. 2 entsprechenden Schnitt.

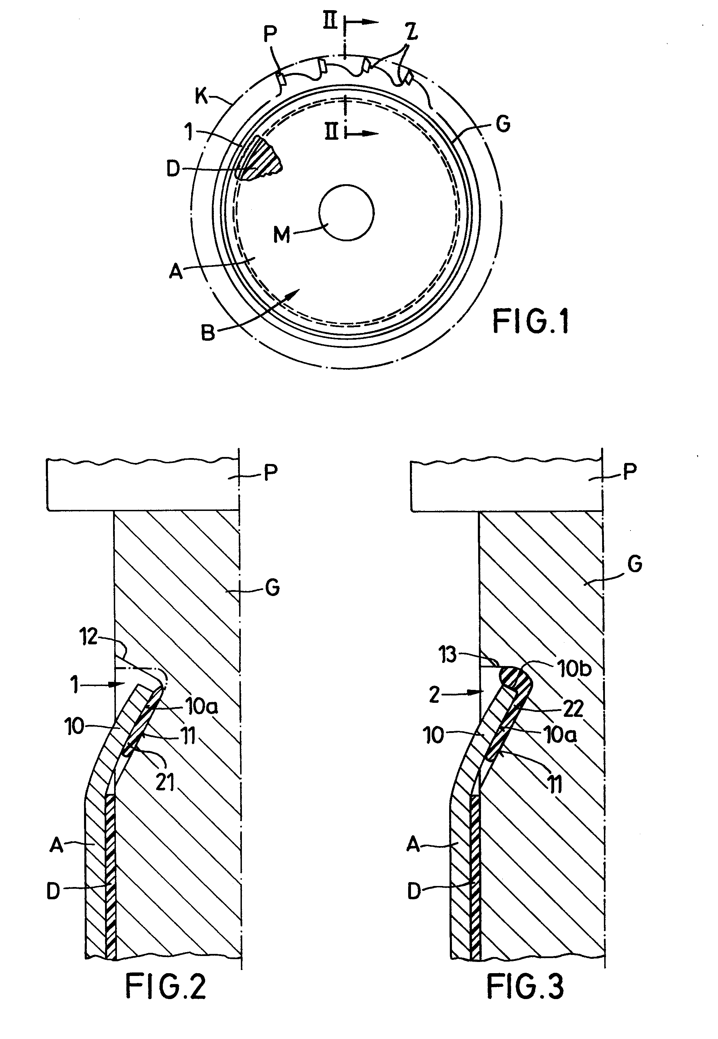

In Fig. 1 ist ein Kreissäge-Werkzeug dargestellt, das als Grundkörper ein aus Stahl bestehendes scheibenförmiges, an seinem Umfang mit Zähnen Z versehenes Stammblatt G enthält. Es ist jeweils nur ein Teil dieser mit regelmäßigen oder auch mit unregelmäßigen Abständen voneinander über den ganzen Umfang verteilt angeordneten Zähne eingezeichnet, wobei mit der strichpunktierten Linie K der Flugkreis der Zahnspitzen angedeutet ist. Die Zähne Z können mit aufgelöteten Schneidplättchen P aus Hartmetall oder einem anderen Werkstoff versehen sein oder eine sonstige Ausbildung haben, so auch unmittelbar die Schneiden des Werkzeuges bilden. Eine Mittelbohrung ist mit dem Buchstaben M bezeichnet.

Der Grundkörper G des Werkzeuges ist auf beiden Seiten mit einer schwingungsmindernden Bekleidung B versehen, von denen in Fig. 1 nur eine sichtbar ist. Jede dieser Bekleidungen enthält zumindest eine Schicht D aus viskoelastischem Material, namentlich einem Kunstharz mit Klebeeigenschaften, sowie eine Abdeckung A auf der letzteren. Die Abdeckungen können aus Stahl, aus Nichteisenmetallen, Metall-Legierungen, Hartstoffen, aber auch aus Kunststoffen, namentlich solchen mit großer Abriebfestigkeit, und anderen geeigneten Materialien bestehen. Vorteilhaft sind sie als Folie ausgebildet, z.B. mit einer Dicke von einigen zehntel Millimetern. Im übrigen läßt sich die Dicke der Abdeckung A und der viskoelastischen Schicht D je nach dem Bedarfsfall oder Einsatzzweck wählen.

Für die Abdeckung A ist eine von der viskoelastischen Schicht D unabhängige und dieser ein Dämpfungsvermögen unter Schubbeanspruchung belassende Halterung in der Weise vorgesehen, daß die Abdeckung mit einem in eine Nut 1 hineinragenden Randbereich 10 innerhalb dieser Nut zumindest teilweise rückseitig und/oder stirnseitig durch wenigstens ein Halteelement elastisch mit dem Grundkörper G verbunden ist.

Die Nut 1 befindet sich in der Seitenfläche des Grundkörpers. Sie ist in Umfangsrichtung durchgehend und hat in ihrem Verlauf eine dem Randverlauf der Abdeckung angepaßte Form. Bei kreisförmig begrenzter Abdeckung verläuft die Nut 1 somit ebenfalls kreisförmig. Dies ist in Fig. 1 gezeigt. Hat die Abdeckung eine andere, d.h. von der Kreisform abweichende Randform, so ist der Verlauf der Nut entsprechend angepaßt. Die Tiefe der Nut braucht nur so groß zu sein, daß sie den Randbereich der Abdeckung und das Halteelement dafür in der erforderlichen Weise aufnehmen kann. Als vorteilhaftes Beispiel läßt sich eine Dicke der Abdeckung von etwa 0,3 mm nennen.

Wie Fig. 2 im einzelnen erkennen läßt, weist die Nut 1 bei dieser Ausführung eine geneigte Fläche 11 auf (die bei kreisförmiger Nut also eine Kegelfläche ist), welche die Basis für die lagesichernde Verbindung mit der Abdeckung A bildet. Der in die Nut 1 hineinragende Randbereich 10 der Abdeckung verläuft im wesentlichen parallel zu der geneigten Fläche 11. Zwischen der Fläche 11 der Nut 1 und dem Randbereich 10 der Abdeckung ist ein Halteelement in Form einer Schicht 21 eines elastischen Klebers angebracht. Damit ist zwischen der Rückseite 10a des Randbereichs 10 und dem Grundkörper G eine Verbindung hergestellt, die auf Schub beansprucht werden kann und eine ungehinderte Dämpfungswirkung durch die Bekleidung B zuläßt.

Radial außerhalb des Randbereiches 10 der Abdeckung wird die Nut von einer weiteren geneigten Fläche 12 begrenzt, die etwa im rechten Winkel zu der Fläche 11 steht. Es kann aber auch eine andere Begrenzungsfläche vorhanden sein, z.B. eine zylindrische Fläche 13, wie sie bei der Nut 2 in der Ausführung nach Fig. 3 vorhanden und in Fig. 2 strichpunktiert angedeutet ist.

Bei der Ausführung nach Fig. 3 ist die elastische Verbindung zwischen dem Randbereich 10 der Abdeckung A und dem Grundkörper G durch ein Halteelement 22 bewirkt, das an der rückseitigen Fläche 10a und der stirnseitigen Randfläche 10b des Randbereiches 10 mit diesem in Kontakt steht und auf Schub und Druck beanspruchbar ist.

Bei den bisher erläuterten sowie auch bei allen anderen Ausführungen des Werkzeuges kann sich das Halteelement über den ganzen Umfang der Nut bzw. des Randbereichs der Abdeckung erstrecken, oder es können mehrere mit Abstand voneinander über den Umfang der Nut verteilt angeordnete Halteelemente vorgesehen sein, insbesondere in Form einzelner Kleber-Auftragstellen.

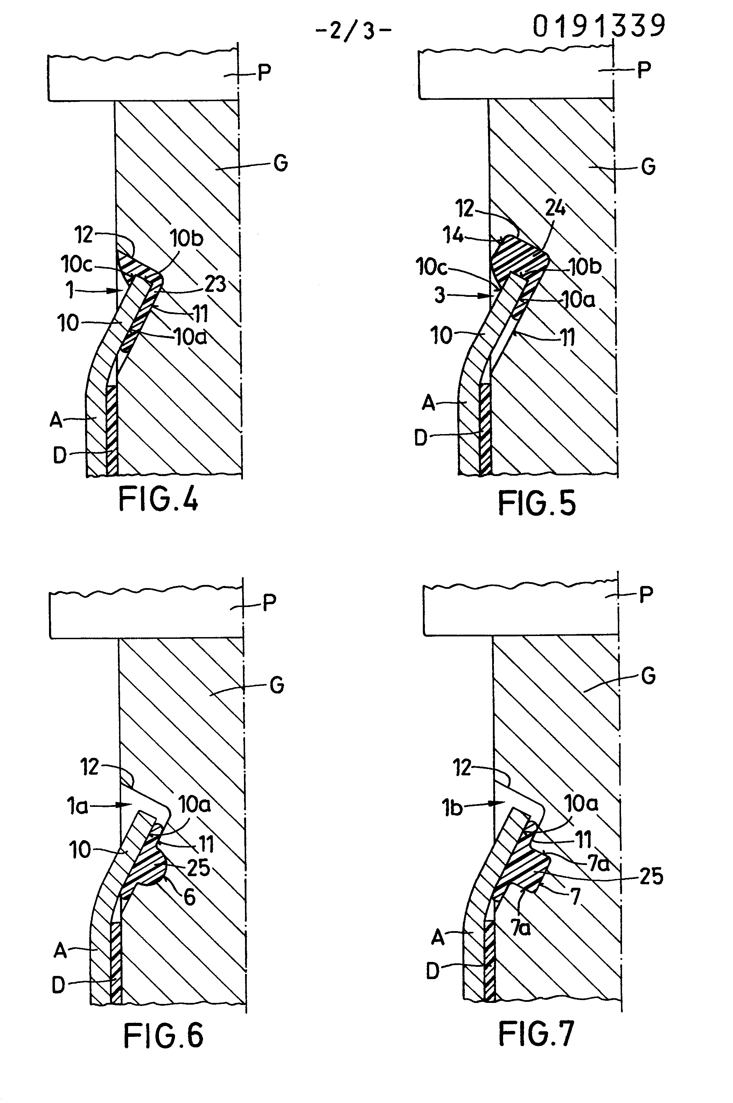

Bei der Ausführung nach Fig. 4 hat die Nut 1 die gleiche Form wie in Fig. 2. Das Halteelement 23 steht hier nicht nur mit der Rückseite 10a und der Stirnseite 10b des Randbereiches 10 der Abdeckung im Kontakt, sondern füllt die Nut an der Fläche 12 noch so weit aus, daß es auch noch einen Teil der Vorderseite 10c des Randbereiches 10 bedeckt.

Die Ausführung nach Fig. 5 entspricht weitgehend derjenigen nach Fig. 4, jedoch mündet die Fläche 12 der Nut 3 nicht unmittelbar nach außen, sondern die Nut hat eine hinterschnittene Form, so daß sich noch eine innere Flanke 14 ergibt, wodurch das Material des Halteelements 24 selbst in seiner Lage noch besonders gesichert ist. Auch läßt sich das Material des Halteelements dabei besonders gut dosieren und plazieren.

Bei den Ausführungen nach den Fig. 6 und 7 entsprechen die Nuten 1a und 1b in ihrer Form im wesentlichen der Nut 1 nach Fig. 1 und 2, jedoch ist in der Grundfläche 11 der Nut jeweils noch eine Vertiefung oder Ausnehmung vorhanden, die einen Teil des als Halteelement 25 vorgesehenen Klebers oder anderen Materials aufnimmt. Auch hierdurch läßt sich das Material besonders gut plazieren und gezielt anbringen. Außerdem ergeben sich noch Vorteile hinsichtlich der Elastizität der Verbindung. Bei der Ausführung nach Fig. 6 hat die Vertiefung 6 einen etwa halbkreisförmigen Querschnitt, während bei der Ausführung nach Fig. 7 eine Ausnehmung 7 mit zueinander geneigten Seitenflächen 7a vorhanden ist, so daß sich eine hinterschnittene, schwalbenschwanzähnliche Form ergibt, die das Halteelement besonders sicher aufnimmt.

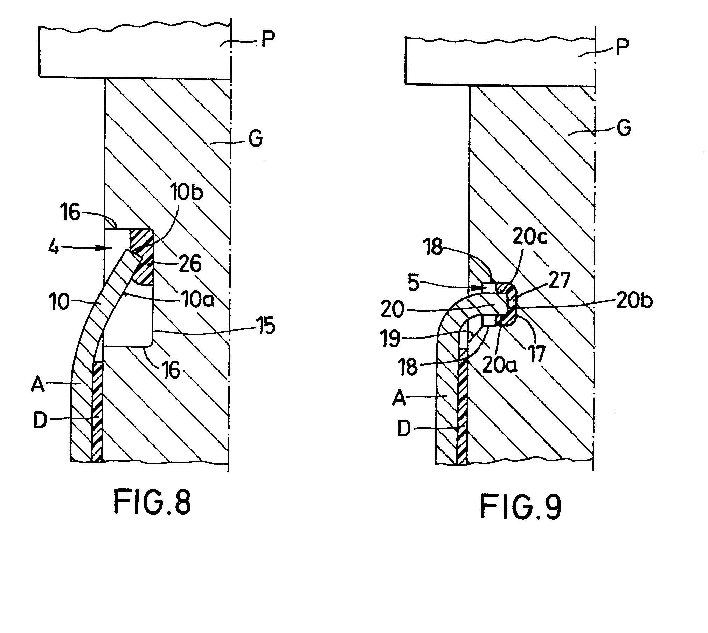

Fig. 8 zeigt eine im Querschnitt etwa rechteckige Nut 4 mit einer Grundfläche 15 und Wandungen 16, wobei ein Haltekörper 26, insbesondere in Form eines Klebermaterials, einerseits in einer Ecke der Nut liegt und andererseits mit einem Teil der Rückseite 10a sowie mit der Stirnfläche 10b des Randbereichs 10 der Abdeckung in Kontakt steht.

In Fig. 9 ist eine andere Ausführung des Werkzeuges dargestellt, wobei die Abdeckung A einen abgewinkelten Rand 20 aufweist, der in eine Nut 5 eingreift und an der Stirnfläche 20b mit einem Halteelement 27 in Form eines Klebers od.dgl. im Kontakt steht und dadurch mit dem Grundkörper G elastisch verbunden ist. Das Halteelement 27 bedeckt nicht nur die Grundfläche 17 der Nut, sondern erstreckt sich auch noch zu den Seitenwandungen 18 der Nut 5 hin, so daß die Randpartie der Abdeckung in dem Halteelement 27 eingebettet ist, das somit auch noch kleine Teile der Seitenflächen 20a und 20c bedeckt. Die Nut 5 kann abgerundete oder abgeschrägte Außenkanten aufweisen, wie bei der Ziffer 19 erkennbar ist.

Alle in der vorstehenden Beschreibung erwähnten bzw. in der Zeichnung dargestellten Merkmale sollen, sofern der bekannte Stand der Technik es zuläßt, für sich allein oder auch in Kombinationen als unter die Erfindung fallend angesehen werden.

Patentansprüche

1. Scheibenförmiges, am Umfang mit definierten oder undefinierten Schneiden versehenes Werkzeug, namentlich Kreissäge-Werkzeug, Trennschleifscheibe od.dgl., wobei der Grundkörper oder das Stammblatt des Werkzeuges wenigstens auf einer Seite mit einer schwingungsmindernden Bekleidung versehen ist, die eine Schicht aus viskoelastischem Material und eine Abdeckung auf dieser enthält, die wenigstens im Bereich ihres äußeren Umfangs am Grundkörper gehalten ist, wobei der Grundkörper wenigstens in einer Seitenfläche eine durchgehende Nut aufweist und die Abdeckung sich mit ihrem äußeren Randbereich in die Nut hinein erstreckt, dadurch gekennzeichnet, daß die Abdeckung (A) innerhalb der Nut (1 bis 5) zumindest teilweise rückseitig und/oder stirnseitig durch wenigstens ein Halteelement (21 bis 27) elastisch mit dem Grundkörper (G) verbunden ist.

2. Werkzeug nach Anspruch 1, dadurch gekennzeichnet, daß als Halterung (21 bis 27) ein elastischer Kleber vorgesehen ist.

3. Werkzeug nach einem der Ansprüche 1 und 2, dadurch gekennzeichnet, daß die Nut (1, 2, 3) eine geneigte Fläche (11) als Auflage für ein Halteelement (21 bis 24) aufweist.

4. Werkzeug nach Anspruch 3, dadurch gekennzeichnet, daß ein Randbereich (10) der Abdeckung (A) wenigstens teilweise im wesentlichen parallel zu der geneigten Fläche (11) verläuft.

5. Werkzeug nach einem der Ansprüche 1 bis 4, dadurch gekennzeichnet, daß in der Nut (1a, 1b) wenigstens eine Vertiefung (6), Ausnehmung (7) od.dgl. zur teilweisen Aufnahme des Halteelements (25) vorgesehen ist.

6. Werkzeug nach einem der Ansprüche 1 bis 5, dadurch gekennzeichnet, daß die Nut (1) in einem radial über die Abdeckung (A) hinausragenden Teil eine geneigte Begrenzungsfläche (12) aufweist.

7. Werkzeug nach einem der Ansprüche 1 bis 5, dadurch gekennzeichnet, daß die Nut (2) in einem radial über die Abdeckung (A) hinausragenden Teil eine im wesentlichen zylindrische Begrenzungsfläche (13) aufweist.

8. Werkzeug nach einem der Ansprüche 1 bis 5, dadurch gekennzeichnet, daß die Nut (3) in einem radial über die Abdeckung (A) hinausragenden Teil eine Hinterschneidung (14) aufweist.

9. Werkzeug nach einem oder mehreren der voraufgehenden Ansprüche, dadurch gekennzeichnet, daß die Abdeckung (A) einen abgewinkelten Rand (20) aufweist, der sich in die Nut (5) hinein erstreckt.

0191339

FIG.1

FIG.2

FIG.3

FIG.4

FIG.5

FIG.6

FIG.7

FIG.8

FIG.9